# EUROPÄISCHE PATENTANMELDUNG

(11) **EP 1 770 807 A1**
(43) Veröffentlichungstag der Anmeldung: **04.04.2007**
(21) Anmeldenummer: 06015859.9
(22) Anmeldetag: 31.07.2006
(51) Int. Cl.: H01M 8/02, H01M 8/04

(54) **Kühlbare Bipolarplatte**

(30) Priorität: 30.09.2005 DE 102005046795
(71) Anmelder: Behr GmbH & Co. KG, 70469 Stuttgart (DE)
(72) Erfinder: Brenner, Martin, Dipl.-Ing., 75249 Kieselbronn (DE); Kaiser, Wolfram, Dr.-Ing., 70191 Stuttgart (DE)
(74) Vertreter: Mantel, Berthold Friedrich

(57) **Zusammenfassung**

Die Erfindung betrifft eine Bipolarplatte (1) für einen Brennstoffzellenstapel (B), aufweisend einen ersten Fluidkanal (4.1) für einen ersten Teilvolumenstrom eines ersten Fluids (K), einen zweiten Fluidkanal (4.2) für einen zweiten Teilvolumenstrom des ersten Fluids (K) und einen dritten Fluidkanal (5.1) für einen Volumenstrom eines zweiten Fluids (A), wobei die Fluidkanäle (4.1, 4.2, 5.1) voneinander getrennt angeordnet sind und wobei der erste Fluidkanal (4.1) und der zweite Fluidkanal (4.2) so ausgebildet sind, dass für den zweiten Teilvolumenstrom ein betirebspunktspezifisches Größenverhältnis zu dem ersten Teilvolumenstrom vorgegeben ist.

## Beschreibung

Die Erfindung betrifft eine Bipolarplatte, insbesondere für einen Brennstoffzellenstapel eines Fahrzeugs.

Die Umwandlung von chemischer in elektrische Energie mittels Brennstoffzellen stellt eine effiziente und umweltfreundliche Methode zur Gewinnung von elektrischem Strom aus den Elementen Wasserstoff und Sauerstoff dar. Dabei finden üblicherweise zwei räumlich getrennte Elektrodenreaktionen statt, bei denen Elektronen freigesetzt beziehungsweise gebunden werden. Die Reaktanden Sauerstoff und Wasserstoff können in Form verschiedener Fluide bereitgestellt werden, sie müssen nicht zwingend in reiner Form vorliegen. Die Verwendung von reinem, molekularem Sauerstoff und Wasserstoff ist ebenso möglich wie die Verwendung von Luftsauerstoff und Methan. Ein erstes Beispiel für zwei korrespondierende Elektrodenreaktionen sind folgende Reaktionen:

H₂=>2 H⁺ 2 e⁻ (Anodenreaktion)

2 H⁺ + 2 e⁻ + ½ O₂ => H₂O (Kathodenreaktion)

Die Art der Reaktion hängt von der Bauart der Brennstoffzelle und von den verwendeten Fluiden ab. Ein zweites Beispiel für zwei korrespondierende Elektrodenreaktionen sind folgende Reaktionen:

H₂ + O²⁻ => H₂O + 2 e⁻ (Anodenreaktion A)

CO + O²⁻ => CO₂ + 2 e⁻ (Anodenreaktion B)

O₂ + 4 ^{e-} => 2 O²⁻ (Kathodenreaktion)

Allen Brennstoffzellen gemein sind einerseits der Transport einer Spezies in elektrisch nichtneutraler Form durch einen Elektrolyten und andererseits der parallel verlaufende Transport von Elektronen durch einen äußeren Leiter, um die Spezies nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete -Brennstoffzellen aufeinandergestapelt und ein solchermaßen gebildeter Stapel als Stromquelle verwendet. Eine einzelne Brennstoffzelle besteht dabei aus einer Elektrolyteinheit wie einer Membran sowie aus zwei mit Katalysatormaterial belegten Elektroden. Die Membran befindet sich trennend zwischen den Reaktanden und weist eine lonenleitfähigkeit auf, beispielsweise eine H⁺-Protonenleitfähigkeit oder eine O²-Leitfähigkeit. Die Elektroden sind unter anderem zum Abgriff des von der Brennstoffzelle erzeugten elektrischen Stroms erforderlich.

Die Fluide, beispielsweise Wasserstoff und Sauerstoff, und das Reaktionsprodukt Wasser sowie gegebenenfalls ein Fluid, das zur Abführung von überschüssiger Reaktionswärme dient, strömen durch Fluidkanäle in die Bereiche der Reaktionszonen hinein und aus ihnen hinaus. Insbesondere bei Verwendung eines wärmeabführenden Fluids wird durch eine thermische Verbindung der jeweiligen Fluidkanäle für einen ausreichenden Wärmeübertrag zwischen den jeweiligen Fluiden gesorgt. Ein Kanalsystem von Fluidkanälen für ein bestimmtes Fluid wird allgemein auch als Flowfield bezeichnet.

Die Reaktanden und Reaktionsprodukte werden im Folgenden als Reaktionsfluide bezeichnet. Als Temperierfluid wird ein Fluidmedium bezeichnet, das geeignet ist, einer Vorrichtung beziehungsweise einer Reaktionszone Wärme zuzuführen oder sie daraus abzuführen.

Es ist bekannt, die in einer Brennstoffzelle entstehende Abwärme zumindest teilweise über ein Temperierfluid, das durch ein separates Kühlkanalsystem strömt, abzuführen. Da die Temperaturdifferenz zwischen Brennstoffzelle und Umgebung üblicherweise geringer ist als bei einem Verbrennungsmotor vergleichbarer Leistung, ist der Kühlungsaufwand in der Regel größer. Wird als Temperierfluid Umgebungsluft verwendet, wird aufgrund der relativ geringen Wärmekapazität von Luft ein wesentlich größerer Volumenstrom für die Abführung der Abwärme benötigt als für die Versorgung der Kathodenelektrode mit dem Reaktionsmedium.

Es sind Brennstoffzellenstapel bekannt, bei denen die Kühlung der Brennstoffzellen durch Einstellung eines ausreichend großen Volumenstroms des kathodenseitigen Reaktionsfluids erzielt wird, der gleichzeitig zur Kühlung dient. Aufgrund von Austrocknungseffekten ist beim Einsatz solcher Vorrichtungen allerdings die Betriebstemperatur beziehungsweise die maximale Lebensdauer stark eingeschränkt. Um negative Auswirkungen wie die Austrocknung der Elektrolyteinheit aufgrund zu großer Volumenströme zu vermeiden, ist es zweckmäßig, das Temperierfluid und die Reaktionsfluide getrennt zu führen.

Dementsprechend sind Brennstoffzellenstapel bekannt, bei denen Kühlkanalsystem und Kathodenkanalsystem vollständig voneinander getrennt sind. Beispielsweise beschreibt die DE 100 15 360 A1 eine Bipolarplatte für Brennstoffzellen, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem für ein Kühlmittel und an den Außenflächen jeder Platte ein Kanalsystem für Gasströme.

Aufgrund stark unterschiedlicher Druckverluste in den Kanalsystemen sind bei derartigen Bipolarplatten in der Regel unterschiedliche Kompressoren mit verschiedenen Druckniveaus und entsprechenden Druckverlusten erforderlich. Die zusätzlichen Komponenten und die Druckverluste führen zu größerem Bauvolumen, höheren Kosten und geringeren Systemwirkungsgraden durch höheren parasitären Energieverbrauch und höhere Herstellungskosten.

Der Erfindung liegt daher die Aufgabe zugrunde, eine verbesserte Bipolarplatte anzugeben, welche eine Temperierung von gestapelten Brennstoffzellen ohne die aufgeführten Nachteile ermöglicht.

Die Aufgabe wird gelöst durch eine Bipolarplatte, welche die in Anspruch 1 angegebenen Merkmale aufweist.

Vorteilhafte Ausgestaltungen sind Gegenstand der abhängigen Ansprüche.

Die erfindungsgemäße Bipolarplatte für einen Brennstoffzellenstapel weist einen ersten Fluidkanal für einen ersten Teilvolumenstrom eines ersten Fluids, einen zweiten Fluidkanal für einen zweiten Teilvolumenstrom des ersten Fluids und einen dritten Fluidkanal für einen Volumenstrom eines zweiten Fluids auf, wobei die Fluidkanäle voneinander getrennt angeordnet sind und wobei der erste Fluidkanal und der zweite Fluidkanal so ausgebildet sind, dass ein betriebspunktspezifisches Größenverhältnis des zweiten Teilvolumenstroms zu dem ersten Teilvolumenstrom vorgegeben ist.

Je nach Betriebspunkt der Zelle kann das Größenverhältnis beispielsweise kleiner als 1 werden, da der erste Teilvolumenstrom selbst schon eine kühlende Wirkung aufweist. Es sind auch Betriebspunkte vorstellbar, bei denen der erste Teilvolumenstrom 70% der Abwärme aufnimmt und der zweite Teilvolumenstrom nur noch 30% aufnehmen muss und somit ein Größenverhältnis von kleiner 1 vorgegeben ist. Wird die Zelle bei wechselnden Betriebspunkten betrieben, kann sich aufgrund der unterschiedlichen Geometrien ein Szenario einstellen, bei dem der erste Teilvolumenstrom noch laminaren Charakter hat, während der zweite Teilvolumenstrom bereits turbulent ist. Dadurch verändern sich das Verhältnis der Widerstandsbeiwerte und damit das Verhältnis der Volumenströme. Ein festes Verhältnis ist nur für jeden einzelnen Betriebspunkt oder ggf. einen Betriebsbereich gegeben, nicht aber für alle Betriebspunkte.

Die Erfindung verwendet einen separaten zweiten Teilvolumenstrom des ersten Fluids als Temperierfluid, wobei die beiden Teilvolumenströme des ersten Fluids in einem betriebspunktspezifischen Größenverhältnis zueinander stehen. Durch den zweiten Teilvolumenstrom ist eine ausreichende Kühlung der anliegenden Brennstoffzellen möglich. Es entstehen keine zusätzlichen Druckunterschiede und somit keine Druckverluste. Mehrere Kompressoren bzw. mehrere Druckstufen sind nicht erforderlich. Eine nachteilige Austrocknung des Elektrolyts wird vermieden, da der mit dem Elektrolyt in Verbindung stehende erste Teilvolumenstrom des ersten Fluids keinen erhöhten Wert aufzuweisen braucht.

Vorzugsweise sind der erste Fluidkanal und der zweite Fluidkanal über ein Teilerelement mit einer gemeinsamen Zuleitung für das erste Fluid verbindbar. So kann ein einzelner Kompressor gleichzeitig für die Zuführung des ersten Fluids sowohl als Reaktionsfluid als auch als getrenntes Temperierfluid dienen. Zweckmäßigerweise teilt dabei das Teilerelement einen Anfangs- oder Gesamtvolumenstrom des ersten Fluids gemäß dem betriebspunktspezifischen Größenverhältnis in den ersten Teilvolumenstrom und den zweiten Teilvolumenstrom auf. Druckunterschiede und -verluste können so vermieden werden.

In einer bevorzugten Ausgestaltung der Erfindung ist der erste Fluidkanal entlang eines ersten Formkörpers angeordnet, der dritte Fluidkanal entlang eines zweiten Formkörpers angeordnet, und der zweite Fluidkanal zwischen den beiden Formkörpern angeordnet. Dies ermöglicht eine einfache Herstellung der Kanalsysteme der Bipolarplatte aus zwei separat herstellbaren Formkörpern.

Vorteilhafterweise sind in dieser Ausgestaltung zwischen dem ersten Formkörper und dem zweiten Formkörper Abstandshalterelemente angeordnet. Sie ermöglichen es, das betriebspunktspezifische Größenverhältnis der Teilvolumenströme genau einzustellen. Als Abstandshalterelemente werden beispielsweise Noppen eingesetzt. Die Noppen sind dabei reihenweise angeordnet, d.h. mehrere voneinander beabstandete Noppen bilden eine Reihe, wobei mehrere parallel zueinander angeordnete Reihen vorgesehen sind.

In einer Weiterbildung ist zwischen dem ersten Formkörper und dem zweiten Formkörper ein Trennkörper angeordnet. Ein solcher erlaubt insbesondere ein einfaches Abstützen der Abstandshalterelemente. Durch einen Trennkörper kann zudem ein zusätzlicher Fluidkanal gebildet werden.

Dieser kann insbesondere mit dem zweiten Fluid Teilvolumenströme für ein zusätzliches Temperieren bilden, um beide Seiten der Bipolarplatte zu kühlen.

Vorzugsweise sind der Trennkörper und/oder die Formkörper als Metallblech ausgebildet. Metallblech weist eine gute Wärmeleitung auf und ist einfach zu bearbeiten, insbesondere zu formen.

In einer besonderen Ausgestaltung ist der erste Fluidkanal quer zu dem dritten Fluidkanal angeordnet. Dies ermöglicht eine einfache Herstellung der Bipolarplatte bei guter Verteilung der Fluide auf die angrenzenden Elektroden. In anderen Ausgestaltungen können die Fluidkanäle in derselben Ebene parallel zueinander verlaufen, beispielsweise in Art von umlaufenden Windungen oder mäanderförmig.

Vorzugsweise sind der erste Fluidkanal an einer Kathode und der dritte Fluidkanal an einer Anode des Brennstoffzellenstapels anordbar. In diesem Fall kann als erstes Fluid insbesondere Luft verwendet werden, so dass einerseits Luftsauerstoff im ersten Teilvolumenstrom als Reaktionsfluid dient und andererseits die Luft im zweiten Teilvolumenstrom als Temperierfluid dient.

Ausführungsbeispiele der Erfindung werden anhand einer Zeichnung näher erläutert. Darin zeigen:
- Fig. 1: eine Explosionszeichnung einer Bipolarplatte mit Trennkörper und
- Fig. 2: eine Explosionszeichnung einer Bipolarplatte ohne Trennkörper.

Einander entsprechende Teile sind in allen Figuren mit den gleichen Bezugszeichen versehen.

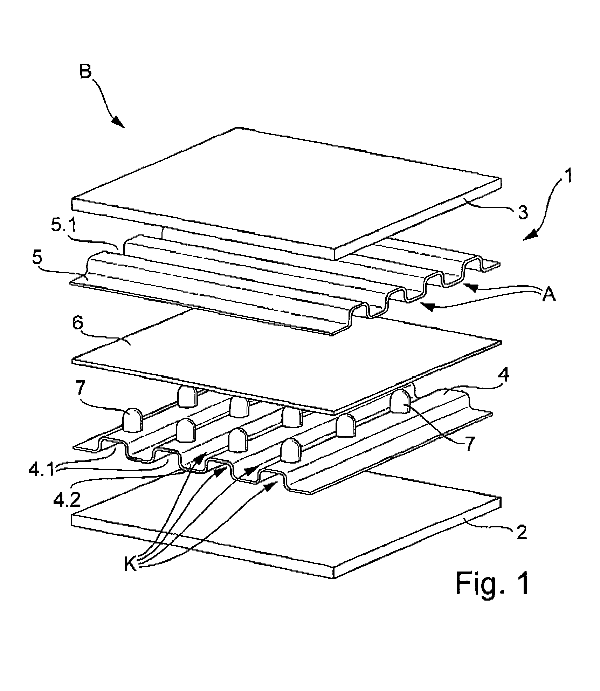

Figur 1 zeigt eine Bipolarplatte 1 zwischen einer benachbarten Kathode 2 und einer benachbarten Anode 3 eines Brennstoffzellenstapels B. Die Bipolarplatte 1 umfasst einen ersten Formkörper 4, einen zweiten Formkörper 5, einen dazwischen angeordneten Trennkörper 6 und Abstandshalterelementen 7, die zwischen dem ersten Formkörper 4 und dem Trennkörper 6 angeordnet sind. Die Formkörper 4, 5 bestehen aus umgeformtem Metallblech mit parallelen Vertiefungen. Der Trennkörper 6 ist als flaches Metallblech ausgebildet. Die Abstandshalterelemente 7 sind als wärmeleitende Noppen ausgeführt.

Die Vertiefungen an der Unterseite des ersten Formkörpers 4 bilden erste Fluidkanäle 4.1 für einen ersten Teilvolumenstrom eines ersten Fluids K, beispielsweise Luft. Die Vertiefungen an der Oberseite des ersten Formkörpers 4 bilden mit dem Trennkörper 6 zweite Fluidkanäle 4.2 für einen zweiten Teilvolumenstrom des ersten Fluids K. Die Vertiefungen an der Oberseite des zweiten Formkörpers 5 bilden dritte Fluidkanäle 5.1 für einen Volumenstrom eines zweiten Fluids A, beispielsweise molekularen Wasserstoff.

Durch die Formkörper 4, 5 und den Trennkörper 6 sind die Fluidkanäle 4.1, 4.2, 5.1 voneinander getrennt. Durch die Abstandshalterelemente 7 sind die zweiten Fluidkanäle 4.2 im Verhältnis zu den ersten Fluidkanälen 4.1 so ausgebildet, dass sich im Betrieb ein betriebsspezifisches Größenverhältnis von 4:1 für den zweiten Teilvolumenstrom zu dem ersten Teilvolumenstrom einstellt. Das erste Fluid wird somit einerseits zur Versorgung der Kathodenreaktion mit Reaktionsluft und andererseits zur Kühlung der Kathoden- und der Anodenreaktion mit Kühlluft aufgespaltet, so dass sich im Betriebsbereich der Bipolarplatte 1 auf beiden Seiten des ersten Formkörpers 4 unterschiedlich große Teilvolumenströme mit dem definierten Teilungs- oder Größenverhältnis einstellen. Andere Größenverhältnisse der Teilvolumenströme sind insbesondere durch Abstandshalterelemente 7 anderer Länge bzw. anderer Formen vorgebbar. Alternativ oder zusätzlich zu Noppen können als Abstandshalterelemente 7 Strukturen eingesetzt werden, welche die Strömung des zweiten Teilvolumenstroms beeinflussen.

Aufgrund der Aufspaltung ist es möglich, sowohl den Fluidstrom zur Versorgung der Kathode mit dem ersten Fluid K als Reaktionsfluid als auch den Fluidstrom zur Versorgung des Kühlkanalsystems mit dem ersten Fluid K als Temperierfluid hinsichtlich des Druckaufbaus aus der gleichen Quelle zu speisen und hier beispielsweise ein einziges Axialgebläse mit geringer Leistungsaufnahme für einen Anfangsvolumenstrom des ersten Fluids K zu verwenden.

Es besteht die Möglichkeit, ein weiteres Fluid zur Homogenisierung der Temperatur des Anodenkanalsystems durch die Zwischenräume von Trennkörper 6 und zweitem Formkörper 5 strömen zu lassen. Ein solcher Volumenstrom kann insbesondere als Teilvolumenstrom des zweiten Fluids A - eines Reaktionsfluids - abgespaltet werden.

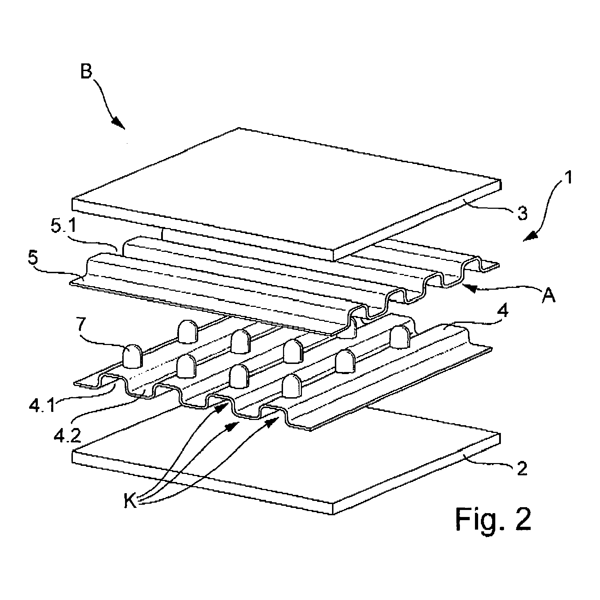

In Figur 2 ist eine alternative Ausführungsform für eine Bipolarplatte 1 zwischen einer benachbarten Kathode 2 und einer benachbarten Anode 3 eines Brennstoffzellenstapels B dargestellt. Die Bipolarplatte 1 umfasst einen ersten Formkörper 4, einem zweiten Formkörper 5 sowie Abstandshalterelementen 7, die unmittelbar zwischen dem ersten Formkörper 4 und dem zweiten Formkörper 5 angeordnet sind. Die Formkörper 4, 5 bestehen aus umgeformtem Metallblech. Die Abstandshalterelemente 7 sind als wärmeleitende Noppen ausgeführt und in direktem Kontakt mit den Fluidkanalböden des zweiten Formkörpers 5 gefügt.

Die Vertiefungen an der Unterseite des ersten Formkörpers 4 bilden erste Fluidkanäle 4.1 für einen ersten Teilvolumenstrom eines ersten Fluids K, beispielsweise Luft als Reaktionsfluid. Die Vertiefungen an der Oberseite des ersten Formkörpers 4 bilden mit den Vertiefungen an der Unterseite des zweiten Formkörpers 5 zweite Fluidkanäle 4.2 für einen zweiten Teilvolumenstrom des ersten Fluids K als Temperierfluid zum Abführen von Wärme. Die Vertiefungen an der Oberseite des zweiten Formkörpers 5 bilden dritte Fluidkanäle 5.1 für einen Volumenstrom eines zweiten Fluids A, beispielsweise molekularen Wasserstoff als Reaktionsfluid.

Durch die Formkörper 4, 5 sind die Fluidkanäle 4.1, 4.2, 5.1 voneinander getrennt. Durch die Abstandshalterelemente 7 sind die zweiten Fluidkanäle 4.2 im Verhältnis zu den ersten Fluidkanälen 4.1 so ausgebildet, dass sich im Betrieb ein betriebsspezifisches Größenverhältnis von 3:1 für den zweiten Teilvolumenstrom zu dem ersten Teilvolumenstrom einstellt.

In einer weiteren, besonders bevorzugten Ausführung weist der Formkörper 4 in einem dem Einströmbereich der Teilvolumenströme K, A stromabwärts entfernten Bereich, in dem der die Kathode 2 belüftende Teilvolumenstrom K bereits eine signifikante Reduzierung seines Sauerstoffgehalts und eine ebenfalls signifikante Erhöhung seines Wasserdampfanteils aufweist, Verbindungsöffnungen zwischen den beiden Teilvolumenströmen K, A auf. Durch diese Verbindungsöffnungen, die als Schlitze, Bohrungen, Poren oder Maschen etc. ausgeführt sein können, ist die Diffusion von Sauerstoff und Wasserdampf zwischen den beiden Teilvolumenströmen K, A möglich. Dadurch kann die Sauerstoffkonzentration des die Kathode 2 belüftenden Teilvolumenstroms K erhöht und seine Wasserdampfbeladung gesenkt werden, was zu einer Verbesserung des Zellwirkungsgrades und der Zellleistung unter Eliminierung der problematischen Austrocknungseffekte führt.

## Patentansprüche

1. Bipolarplatte (1) für einen Brennstoffzellenstapel (B), aufweisend einen ersten Fluidkanal (4.1) für einen ersten Teilvolumenstrom eines ersten Fluids (K), einen zweiten Fluidkanal (4.2) für einen zweiten Teilvolumenstrom des ersten Fluids (K) und einen dritten Fluidkanal (5.1) für einen Volumenstrom eines zweiten Fluids (A), wobei die Fluidkanäle (4.1, 4.2, 5.1) voneinander getrennt angeordnet sind und wobei der erste Fluidkanal (4.1) und der zweite Fluidkanal (4.2) so ausgebildet sind, dass ein betriebspunktspezifisches Größenverhältnis des zweiten Teilvolumenstroms zu dem ersten Teilvolumenstrom vorgegeben ist.

2. Bipolarplatte (1) nach Anspruch 1, **dadurch gekennzeichnet, dass** der erste Fluidkanal (4.1) und der zweite Fluidkanal (4.2) über ein Teilerelement mit einer gemeinsamen Zuleitung für das erste Fluid (K) verbindbar sind.

3. Bipolarplatte (1) nach Anspruch 2, **dadurch gekennzeichnet, dass** das Teilerelement einen Anfangsvolumenstrom des ersten Fluids (K) gemäß dem betriebspunktspezifischen Größenverhältnis in den ersten Teilvolumenstrom und den zweiten Teilvolumenstrom teilt.

4. Bipolarplatte (1) nach einem der vorhergehenden Ansprüche, **dadurch gekennzeichnet, dass** der erste Fluidkanal (4.1) entlang eines ersten Formkörpers (4) angeordnet ist, dass der dritte Fluidkanal (5.1) entlang eines zweiten Formkörpers (5) angeordnet ist, und dass der zweite Fluidkanal (4.2) zwischen den beiden Formkörpern (4, 5) angeordnet ist.

5. Bipolarplatte (1) nach Anspruch 4, **dadurch gekennzeichnet, dass** zwischen dem ersten Formkörper (4) und dem zweiten Formkörper (5) Abstandshalterelemente (7) angeordnet sind.

6. Bipolarplatte (1) nach Anspruch 4 oder 5, **dadurch gekennzeichnet, dass** zwischen dem ersten Formkörper (4) und dem zweiten Formkörper (5) ein Trennkörper (6) angeordnet ist.

7. Bipolarplatte (1) nach Anspruch 6, **dadurch gekennzeichnet, dass** der Trennkörper (6) als Metallblech ausgebildet ist.

8. Bipolarplatte (1) nach einem der Ansprüche 4 bis 7, **dadurch gekennzeichnet, dass** die Formkörper (4, 5) als geformte Metallbleche ausgebildet sind.

9. Bipolarplatte (1) nach einem der vorhergehenden Ansprüche, **dadurch gekennzeichnet, dass** der erste Fluidkanal (4.1) quer zu dem dritten Fluidkanal (5.1) angeordnet ist.

10. Bipolarplatte (1) nach einem der vorhergehenden Ansprüche, **dadurch gekennzeichnet, dass** der erste Fluidkanal (4.1) an einer Kathode (2) und der dritte Fluidkanal (5.1) an einer Anode (3) des Brennstoffzellenstapels (B) anordbar sind.

11. Bipolarplatte (1) nach einem der vorhergehenden Ansprüche, **dadurch gekennzeichnet, dass** das Formteil (4) in einem geeigneten, stromabwärts gelegenen Bereich Durchbrüche bzw. Verbindungsöffnungen zwischen den beiden Teilvolumenströmen (K, A) aufweist.
